# EUROPÄISCHE PATENTSCHRIFT

(11) **EP 2 127 010 B1**
(45) Veröffentlichungstag und Bekanntmachung des Hinweises auf die Patenterteilung: **22.09.2010**
(21) Anmeldenummer: 07846297.5
(22) Anmeldetag: 07.11.2007
(51) Int. Cl.: H01M 8/24, H01M 8/12

(54) **ISOLIER- UND VERSPANNVORRICHTUNG FÜR EINE HOCHTEMPERATUR-BRENNSTOFFZELLENSYSTEMKOMPONENTE**
INSULATING AND TENSIONING DEVICE FOR A HIGH TEMPERATURE FUEL CELL SYSTEM COMPONENT
DISPOSITIF D'ISOLATION ET DE COMPRESSION POUR UN COMPOSANT DE SYSTÈME DE PILES À COMBUSTIBLE À HAUTE TEMPÉRATURE

(30) Priorität: 21.12.2006 DE 102006060809
(43) Veröffentlichungstag der Anmeldung: 02.12.2009
(73) Patentinhaber: Enerday GmbH, 17033 Neubrandenburg (DE)
(72) Erfinder: HAFEMEISTER, Jens, 17235 Neustrelitz (DE); BOLTZE, Matthias, 17039 Wulkenzin (OT Neuendorf) (DE)
(74) Vertreter: Schumacher & Willsau
(86) Internationale Anmeldenummer: PCT/DE2007/002007
(87) Internationale Veröffentlichungsnummer: WO 2008/074283

(56) Entgegenhaltungen:
- WO-A-2006/012844
- DE-A1- 4 324 907
- US-A1- 2006 261 304

## Beschreibung

Die Erfindung betrifft eine Vorrichtung umfassend einen thermisch isolierenden Behälter und zumindest eine in dem Behälter angeordnete Hochtemperatur-Brennstoffzellensystemkomponente, die von zumindest einer Isolierschicht aus einem ersten Material umgeben ist, wobei eine Verspanneinrichtung auf die Isolierschicht einwirkt.

Beispielsweise im Zusammenhang mit SOFC-Brennstoffzellensystemen ist es bekannt, die Brennstoffzellenstapel unter einer definierten Verspannung herzustellen. Bei der während der Herstellung, der Lagerung und dem Einbau des Brennstoffzellenstapels in das bestimmungsgemäße System verwendeten Verspannung kann es sich insbesondere um eine temporäre Verspannung handeln, die entfernt werden kann, nachdem eine endgültige Verspannung vorgesehen wurde. Die endgültige Verspannung kann beispielsweise wie in der Patentschrift DE 103 08 382 B3 angegeben vorgenommen werden. Gemäß der Lehre dieser Patentschrift ist vorgesehen, die endgültige Verspannung außerhalb einer den Hochtemperatur-Brennstoffzellenstapel umgebenden Isolation vorzusehen, und zwar in Form von Spannrahmen und Zugankern. Nachteile einer derartigen Verspannung sind der vergleichsweise hohe Platzbedarf, das hohe Gewicht und die vergleichsweise hohen Kosten. Weiterhin kann das Problem auftreten, dass die hochtemperaturbeständige Isolation unter Druck und hoher Temperatur schwindet, wodurch sich die Isolationseigenschaften verschlechtern können. Denn das Schwinden des Isolationsmaterials kann zu Spalten führen.

Diese Problem kann auch relevant werden, wenn mehrere Komponenten eines Brennstoffzellensystems gemeinsam in einer so genannten Hot-Box untergebracht werden.

Es ist die Aufgabe der Erfindung, die gattungsgemäßen Vorrichtungen insbesondere im Hinblick auf eine Verspannung und Isolierung von Hochtemperatur-Brennstoffzellenstapeln derart weiterzubilden, dass die vorstehend erläuterten Probleme vermieden oder zumindest verringert werden.

Diese Aufgabe wird durch die Merkmale des Anspruchs 1 gelöst.

Vorteilhafte Ausgestaltungen und Weiterbildungen der Erfindung ergeben sich aus den abhängigen Ansprüchen.

Die erfindungsgemäße Vorrichtung baut auf dem gattungsgemäßen Stand der Technik dadurch auf, dass die Verspanneinrichtung ein oder mehrere sich an einem Behältergehäuse abstützende und auf die Isolierschicht einwirkende plattenförmige Elemente aus einem zweiten Material umfasst, das bei einem Anpressdruck elastisch verformbar ist, bei dem das erste Material nicht verformbar ist. Durch die im Vergleich zu dem die Isolierschicht bildenden ersten Material elastischen Eigenschaften des zweiten Materials ist es möglich, dem Auftreten von Spalten entgegenzuwirken, die durch ein Schwinden des Isolationsmaterials hervorgerufen werden, das unter Druck und hoher Temperatur auftreten kann. Somit wird eine dauerhafte uneingeschränkte Isolation der Hochtemperatur-Brennstoffzellensystemkomponente möglich. Weiterhin ist es möglich, über eine vordefinierte Verpressung des zweiten Materials eine definierte Verspannkraft auf die Hochtemperatur-Brennstoffzellensystemkomponente wirken zu lassen.

Im Rahmen der Erfindung ist es insbesondere möglich, dass in dem Behälter zumindest eine der folgenden Hochtemperatur-Brennstoffzellensystemkomponenten angeordnet ist: Hochtemperatur-Brennstoffzellenstapel, Reformer, Brenner, Controller. Besonders vorteilhaft ist es dabei, wenn in dem Behälter zumindest der Hochtemperatur-Brennstoffzellenstapel untergebracht wird, da dieser sowohl isoliert als auch während des Betriebs verspannt sein muss. Zusätzlich oder alternativ ist es aber ebenfalls möglich, einen zur Erzeugung des Brenngases verwendeten Reformer ganz oder teilweise innerhalb der Isolation anzuordnen, wobei die Verspannkräfte in diesem Fall zur Lagefixierung dienen können. Gleiches gilt hinsichtlich eines Brenners, beispielsweise eines Nachbrenners. Im Zusammenhang mit der Unterbringung eines Controllers kann es vorteilhaft sein, diesen außerhalb von der Isolationsschicht anzuordnen, damit die zulässige Betriebstemperatur der elektronischen Bauelemente nicht überschritten wird. In diesem Fall ist es sowohl möglich, den Controller zwischen der Isolierschicht und dem zweiten Material anzuordnen, als auch zwischen dem zweiten Material und dem Behältergehäuse. Gegebenenfalls können in dem ersten und/oder in dem zweiten Material Aussparungen vorgesehen sein, in denen der Controller zumindest abschnittsweise aufgenommen werden kann.

Insbesondere im Hinblick auf die Unterbringung des Hochtemperatur-Brennstoffzellenstapels wird es als besonders vorteilhaft erachtet, dass die Isolierschicht einen Isolierschichtdeckel umfasst, der in einer bevorzugten Ausdehnungsrichtung der Hochtemperatur-Brennstoffzellensystemkomponente beweglich ist. Im Falle eines Hochtemperatur-Brennstoffzellenstapels verläuft die bevorzugte Ausdehnungsrichtung desselben in der Stapelrichtung. Die Isolierschicht kann in diesem Fall in vorteilhafter Weise becherartig so ausgebildet sein, dass der Isolierschichtdeckel innerhalb des Bechers unter Anlage an dessen Innenumfang so zu liegen kommt, dass sich der Isolierschichtdeckel bei einer Höhenänderung des Hochtemperatur-Brennstoffzellenstapels innerhalb des becherartigen Abschnitts der Isolierschicht auf und ab bewegen kann.

Eine ebenfalls bevorzugte Weiterbildung der erfindungsgemäßen Vorrichtung sieht vor, dass sie zumindest einen Durchbruch aufweist, durch den ein oder mehrere Versorgungsleitungen der Hochtemperatur-Brennstoffzellensystemkomponente geführt sind. In Hinblick auf einen Hochtemperatur-Brennstoffzellenstapel können die Versorgungsleitungen beispielsweise die Anodengaszu- und abführungen sowie die Kathodengaszu- und abführungen umfassen. Im Hinblick auf einen Reformer kommen beispielsweise Brennstoff- und Luftzuführungen sowie zumindest eine Brenngasabführung in Betracht. Im Falle eines Brenners kann es neben der Zuführung von Brennstoff erforderlich sein, die Abgase aus der Vorrichtung abzuführen.

Im vorstehend erläuterten Zusammenhang wird es als besonders vorteilhaft erachtet, wenn vorgesehen ist, dass der zumindest eine Durchbruch auf der dem Isolierschichtdeckel gegenüberliegenden Seite der Isolierschicht vorgesehen ist. Beispielsweise im Falle eines Hochtemperatur-Brennstoffzellenstapels können die Versorgungsleitungen an einer Grundplatte des Hochtemperatur-Brennstoffzellenstapels angeordnet sein, so dass sich die bevorzugte Ausdehnungsrichtung senkrecht zu dieser Grundplatte erstreckt.

Im Rahmen der Erfindung wird es als besonders vorteilhaft erachtet, dass das erste Material durch ein mikroporöses Isolationsmaterial ist. Alternativ wäre es denkbar, Hochtemperaturisolierplatten auf Basis von Al₂O₃ zu verwenden.

Als besonders vorteilhaft wird es weiterhin erachtet, dass das erste Material zumindest bei einem Anpressdruck von weniger als 1 N/mm² ohne Verformung bleibt. Dadurch ist es möglich, die durch das zweite Material erzeugten erforderlichen Verspannkräfte über das erste Material auf die Hochtemperatur-Brennstoffzellensystemkomponente vollständig zu übertragen.

Bei bevorzugten Ausführungsformen der Erfindung ist vorgesehen, dass das zweite Material Kautschuk, insbesondere ein Zellkautschukmaterial, oder Polyurethan, insbesondere einen Polyurethanschaum umfasst.

Insbesondere in diesem Zusammenhang wird es weiterhin als vorteilhaft erachtet, dass das zweite Material eine Dichte zwischen 110 g/dm³ und 150 g/dm³ aufweist. Gute Ergebnisse wurden beispielsweise mit Zellkautschukmaterial erzielt, das eine Dichte von ungefähr 130 g/dm³ aufweist.

Die Erfindung ermöglicht es beispielsweise, einen Brennstoffzellenstapel entsprechend der Patentschrift DE 103 08 382 B3 mit mikroporösem Isolationsmaterial zu isolieren. Die Isolation oberhalb des Brennstoffzellenstapels wird vorzugsweise verschiebbar gestaltet, so dass eventuelle Längenausdehnungen des Brennstoffzellenstapels aufgenommen werden können. Weiterhin wird die Isolierung von außen mit Zellkautschuk (Dichte zum Beispiel 130 g/dm³) beziehungsweise Polyurethanschaum belegt. Der Zellkautschuk beziehungsweise der Polyurethanschaum wird mit Hilfe des Behältergehäuses insbesondere einer Verblechung, die an den Seiten beziehungsweise oben und unten verschweißt wird, definiert vorgespannt.

Ein Ausführungsbeispiel der Erfindung wird nachfolgend anhand der zugehörigen Zeichnungen beispielhaft erläutert.

Es zeigen:

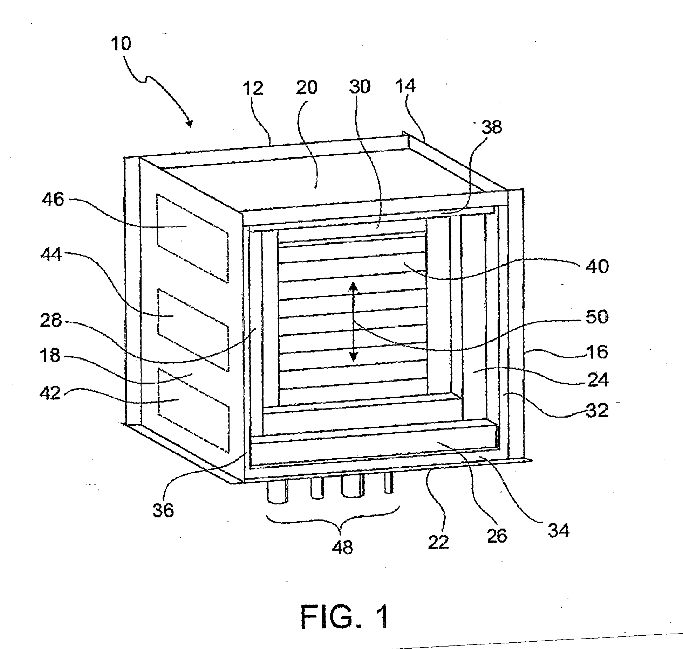

- Figur 1: eine schematische perspektivische Darstellung ei- ner Ausführungsform der erfindungsgemäßen Vor- richtung, wobei die Vorderseite teilweise wegge- schnitten ist, um den Aufbau der Vorrichtung zu veranschaulichen;

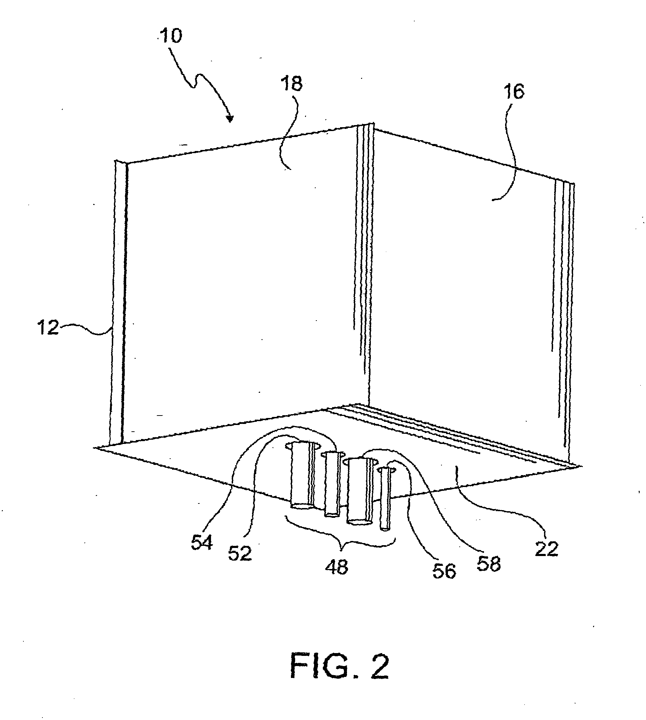

- Figur 2: eine schematische perspektivische Darstellung der Vorrichtung nach Figur 1, wobei insbesondere die Unterseite der Vorrichtung zu erkennen ist.

Die in den Figuren dargestellte Vorrichtung 10 umfasst einen thermisch isolierenden Behälter, in dem zumindest eine Hochtemperatur-Brennstoffzellensystemkomponente angeordnet ist. Der Behälter umfasst ein Behältergehäuse, das aus sechs miteinander verschweißten Blechen 12-22 gebildet ist. Das vordere Blech 16 ist teilweise weggeschnitten dargestellt, damit der innere Aufbau der Vorrichtung 10 zu erkennen ist. Innerhalb des Behältergehäuses 12-22 ist ein Hochtemperatur-Brennstoffzellenstapel 40 angeordnet, dessen Stapelrichtung gleichzeitig die bevorzugte Ausdehnungsrichtung 50 darstellt. Der Hochtemperatur-Brennstoffzellenstapel 40 ist an Versorgungsleitungen 48 angeschlossen, die insbesondere eine Anodengaszu und -abfuhr sowie eine Kathodengaszu und -abfuhr umfassen. Die Versorgungsleitungen 48 sind durch Durchbrüche 52-58 in dem unteren Blech 22 nach außen geführt. Es ist auch möglich, dass die Vorrichtung 10 einen Reformer 42 und/oder einen Brenner 44 und/oder einen Controller 46 aufnimmt, wie dies durch die entsprechenden gestrichelten Blöcke angedeutet ist. Der Hochtemperatur-Brennstoffzellenstapel 40 ist von einer Isolierschicht 24-30 umgeben, die durch mikroporöses Isolationsmaterial gebildet ist. Diese Isolierschicht 24-30 umfasst einen Isolierschichtdeckel 30, der in der bevorzugten Ausdehnungsrichtung 50 des Hochtemperatur-Brennstoffzellenstapels 40 innerhalb des übrigen becherartigen Isolationsmaterials auf und ab beweglich ist. Dabei ist klar, dass das Isolationsmaterial den Hochtemperatur-Brennstoffzellenstapel 40 vollständig umgibt und die Vorderseite des Isolationsmaterials lediglich aus darstellerischen Gründen freigeschnitten ist, um den Aufbau der Vorrichtung 10 zu veranschaulichen. Das die Isolierschicht 24-30 bildende mikroporöse Isolationsmaterial ist so ausgelegt, dass es zumindest bei einem Anpressdruck von weniger als 1 N/mm² ohne Verformung bleibt. Dadurch ist es möglich, den Hochtemperatur-Brennstoffzellenstapel mit Hilfe von auf die Isolierschicht 24-23 einwirkenden plattenförmigen Elementen 32-38 aus einem zweiten Material vorzuspannen, das bei einem Anpressdruck elastisch verformbar ist, bei dem das die Isolierschicht 24-30 bildende mikroporöse Isolationsmaterial nicht verformbar ist. Bei dem zweiten Material handelt es sich im dargestellten Fall um Zellkautschuk, der eine Dichte von 130 g/dm³ aufweist. Der sich gegen das Behältergehäuse 12-22 abstützende Zellkautschuk bringt nicht nur die zur Verspannung des Hochtemperatur-Brennstoffzellenstapels 40 erforderliche Kraft in Richtung der Ausdehnungsrichtung 50 auf, sondern es wirkt auch so auf die Isolierschicht 24-30 ein, dass eine Spaltenbildung durch Schwinden des die Isolierschicht 24-30 bildenden Materials sicher vermieden wird. Es ist klar, dass in dem unteren Bereich 26 der Isolierschicht und in der unteren Platte 34 mit den Durchbrüchen 52-58 ausgerichtete Durchbrüche vorgesehen sein müssen. Dabei liegt das Isolationsmaterial und vorzugsweise auch die entsprechende Zellkautschukplatte 34 jedoch im Idealfall dicht an den Versorgungsleitungen 48 an, um Isolationslücken in diesem Bereich zu vermeiden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Vorrichtung
- 12: Gehäuseblech
- 14: Gehäuseblech
- 16: Gehäuseblech
- 18: Gehäuseblech
- 20: Gehäuseblech
- 22: Gehäuseblech
- 24: Isolierschichtwand
- 26: Isolierschichtwand
- 28.: Isolierschichtwand
- 30: Isolierschichtdeckel
- 32: plattenförmiges Element
- 34: plattenförmiges Element
- 36: plattenförmiges Element
- 38: plattenförmiges Element
- 40: Hochtemperatur-Brennstoffzellenstapel
- 42: Reformer
- 44: Brenner
- 46: Controller
- 48: Versorgungsleitungen
- 50: Ausdehnungsrichtung
- 52: Durchbruch
- 54: Durchbruch
- 56: Durchbruch
- 58: Durchbruch

## Patentansprüche

1. Vorrichtung (10) umfassend einen thermisch isolierenden Behälter (12-38) und zumindest eine in dem Behälter (12-38) angeordnete Hochtemperatur-Brennstoffzellensystemkomponente (40), die von zumindest einer Isolierschicht (24-30) aus einem ersten Material umgeben ist, wobei eine Verspanneinrichtung auf die Isolierschicht einwirkt, **dadurch gekennzeichnet, dass** die Verspanneinrichtung ein oder mehrere sich an einem Behältergehäuse (12-22) abstützende und auf die Isolierschicht (24-30) einwirkende plattenförmige Elemente (32-38) aus einem zweiten Material umfasst, das bei einem Anpressdruck elastisch verformbar ist, bei dem das erste Material nicht verformbar ist.

2. Vorrichtung (10) nach Anspruch 1, **dadurch gekennzeichnet, dass** in dem Behälter (12-38) zumindest eine der folgenden Hochtemperatur-Brennstoffzellensystemkomponenten angeordnet ist: Hochtemperatur-Brennstoffzellenstapel (40), Reformer (42), Brenner (44), Controller (46).

3. Vorrichtung (10) nach Anspruch 1 oder 2, **dadurch gekennzeichnet, dass** die Isolierschicht (24-30) einen Isolierschichtdeckel (30) umfasst, der in einer bevorzugten Ausdehnungsrichtung (50) der Hochtemperatur-Brennstoffzellensystemkomponente (40) beweglich ist.

4. Vorrichtung (10) nach einem der vorhergehenden Ansprüche, **dadurch gekennzeichnet, dass** sie zumindest einen Durchbruch (52-58) aufweist, durch den ein oder mehrere Versorgungsleitungen (48) der Hochtemperatur-Brennstoffzellensystemkomponente (40) geführt sind.

5. Vorrichtung (10) nach Anspruch 3 und 4, **dadurch gekennzeichnet, dass** der zumindest eine Durchbruch (48) auf der dem Isolierschichtdeckel (30) gegenüberliegenden Seite der Isolierschicht (24-30) vorgesehen ist.

6. Vorrichtung (10) nach einem der vorhergehenden Ansprüche, **dadurch gekennzeichnet, dass** das erste Material ein mikroporöses Isolationsmaterial ist.

7. Vorrichtung (10) nach einem der vorhergehenden Ansprüche, **dadurch gekennzeichnet, dass** das erste Material zumindest bei einem Anpressdruck von weniger als 1 N/mm² ohne Verformung bleibt.

8. Vorrichtung (10) nach einem der vorhergehenden Ansprüche, **dadurch gekennzeichnet, dass** das zweite Material Kautschuk, insbesondere ein Zellkautschukmaterial, oder Polyurethan, insbesondere einen Polyurethanschaum umfasst.

9. Vorrichtung (10) nach einem der vorhergehenden Ansprüche, **dadurch gekennzeichnet, dass** das zweite Material eine Dichte zwischen 110 g/dm³ und 150 g/dm³ aufweist.

## Claims

1. A device (10) comprising a thermally insulating receptacle (12-38) and, arranged in the receptacle (12-38), at least one high-temperature fuel cell system component (40) enclosed by at least one insulating layer (24-30) of a first material, a clamping means acting on the insulating layer, **characterized in that** the clamping means comprises, supported by a receptacle housing (12-22) and acting on the insulating layer (24-30), one or more plate-shaped elements (32-38) made of a second material which is elastically deformable at a contact pressure, at which the first material is not deformable.

2. The device (10) as set forth in claim 1, **characterized in that** at least one of the following high-temperature fuel cell system components is arranged in the receptacle (12-38): high-temperature fuel cell stack (40), reformer (42), burner (44), controller (46).

3. The device (10) as set forth in claim 1 or 2, **characterized in that** the insulating layer (24-30) comprises a insulating layer cover (30), movable in a preferred expansion direction (50) of the high-temperature fuel cell system component (40).

4. The device (10) as set forth in any of the preceding claims, **characterized in that** it comprises at least one aperture (52-58) through which one or more supply lines (48) of the high-temperature fuel cell system component (40) are guided.

5. The device (10) as set forth in claim 3 and 4, **characterized in that** the at least one aperture (48) is provided on the side of the insulating layer (24-30) opposite the insulating layer cover (30.

6. The device (10) as set forth in any of the preceding claims, **characterized in that** the first material is a microporous insulant.

7. The device (10) as set forth in any of the preceding claims, **characterized in that** the first material does not deform when the contact pressure is less than 1 N/mm².

8. The device (10) as set forth in any of the preceding claims, **characterized in that** the second material comprises caoutchouc, particularly a cellular caoutchouc material, or polyurethane, particularly foamed polyurethane.

9. The device (10) as set forth in any of the preceding claims, **characterized in that** the second material has a density in the range 110 g/dm³ to 150 g/dm³.

## Revendications

1. Dispositif (10) comportant un récipient (12-38) isolant thermique et au moins un composant de système pile à combustible à haute température (40) qui est agencé dans le récipient (12-38) et entouré d'au moins une couche isolante (24-30) d'un premier matériau, un moyen de serrage agissant sur la couche isolante, **caractérisé en ce que** le moyen de serrage comporte un ou plusieurs éléments (32-38) en forme de plaque qui s'appuient contre une boîte du récipient (12-22) et qui agissent sur la couche isolante (24-30), lesdits éléments étant faits d'un deuxième matériau qui est déformable élastiquement à une pression de contact à laquelle le premier matériau n'est pas déformable.

2. Dispositif (10) selon la revendication 1, **caractérisé en ce qu'**au moins l'un des composants de système pile à combustible à haute température suivants est agencé dans le récipient (12-38): bloc de pile à combustible à haute température (40), reformeur (42), brûleur (44), contrôleur (46).

3. Dispositif (10) selon la revendication 1 ou 2, **caractérisé en ce que** la couche isolante (24-30) comporte un couvercle de couche isolante (30) qui est volant dans une direction d'expansion préférée (50) du composant de système pile à combustible à haute température (40).

4. Dispositif (10) selon l'une quelconque des revendications précédentes, **caractérisé en ce qu'**il comporte au moins une percée (52-58) à travers laquelle une ou plusieurs lignes d'alimentation (48) du composant de système pile à combustible à haute température (40) sont guidées.

5. Dispositif (10) selon la revendication 3 et 4, **caractérisé en ce que** l'au moins une percée (48) est agencé sur le côté de la couche isolante (24-30) qui est opposé au couvercle de couche isolante (30).

6. Dispositif (10) selon l'une quelconque des revendications précédentes, **caractérisé en ce que** le premier matériau est un matériau isolant microporeux.

7. Dispositif (10) selon l'une quelconque des revendications précédentes, **caractérisé en ce que** le premier matériau n'est pas déformé pour le moins si la pression de contact est inférieure à 1 N/mm².

8. Dispositif (10) selon l'une quelconque des revendications précédentes, **caractérisé en ce que** le deuxième matériau comporte du caoutchouc, notamment un matériau à caoutchouc cellulaire, ou du polyuréthane, notamment une mousse à polyuréthane.

9. Dispositif (10) selon l'une quelconque des revendications précédentes, **caractérisé en ce que** le deuxième matériau comporte une densité entre 110 g/dm³ et 150 g/dm³.
